# EUROPEAN PATENT SPECIFICATION

(11) **EP 0 667 837 B1**
(45) Date of publication and mention of the grant of the patent: **29.07.1998**
(21) Application number: 94900065.7
(22) Date of filing: 08.11.1993
(51) Int. Cl.: C02F 3/12, B01D 21/00

(54) **A PURIFICATION SYSTEM WITH A LAMELLA SEPARATOR**
REINIGUNGSSYSTEM MIT LAMELLENSEPARATOR
SYSTEME DE PURIFICATION AVEC SEPARATEUR A LAMELLES

(30) Priority: 09.11.1992 DK 136092
(43) Date of publication of application: 23.08.1995
(73) Proprietor: COWICONSULT RADGIVENDE INGENIORER A/S, DK-2800 Lyngby (DK)
(72) Inventor: ANDERSEN, Karsten, Krogh, DK-2830 Virum (DK)
(74) Representative: Wittrup, Flemming
(86) International application number: DK9300363
(87) International publication number: WO9411312

(56) References cited:
- EP-A- 0 048 630
- EP-A- 0 383 674
- WO-A-82/00134
- DE-A- 2 039 422
- GB-A- 1 375 458
- US-A- 3 482 694

## Description

The invention concerns a purification system of the type defined in the introductory portion of claim 1. The invention also concerns a lamella separator as defined in the introductory portion of claim 8.

It is well-known to perform biological purification using so-called activated sludge. Activated biomass or activated sludge are expressions covering colonies of useful microorganisms which absorb organic material and various nutritive salts, such as nitrogen compounds, from the liquid in which the sludge is present. In purification systems the water to be purified will be kept in motion and leaves the basin after a certain residence time. For the level of microorganisms in the purification basin to be controlled it is necessary that the activated sludge is separated from the effluent and is recycled to the basin or the process tank. This has been done so far using a so-called secondary settling tank, which is formed by a circular, preferably cast tank provided with rotary scrapers. The water is relatively quiet in the secondary settling tank, so that the activated sludge settles. The scrapers collect the sludge, which can then be sucked up and recycled to the process tank. This solution works satisfactorily, but unfortunately the cost price of such a secondary settling tank frequently accounts for such a great part of the total price of the purification system that the price of a secondary settling tank is not commensurate with the function.

Removal of nitrogen compounds is known i.a. from EP-B-474 296.

GB 1 375 458 defines a purification system of the type which is called combination tanks. Such a system has a commom housing structure which surrounds a main section in which aeration takes place, and a secondary section in which settling or sedimentation takes place. The two sections are to be considered as two separate chambers, the circulation between the chambers being established by an overflow wall and a narrow gap in the bottom, respectively, which serves to suck the settled sludge. Thus, two very narrow passages are involved owing to a very high suction effect at the bottom of the settling section. This technique is related to relatively small amounts of waste water, and if not comparable to the volume of the rest of the system, the volume of the sedimentation section is at any rate of the same order. This means that the volume where the sedimentation takes place cannot be regarded as being negligable in relation to the volume of the aeration zone. This technique cannot readily be scaled up to huge systems where large amounts of waste water are handled.

An other example of a purification system of this art is disclosed in EP-A1-383 674. Here a purification system consisting of a process tank, wherein waste water is mixed with activated biomass, and a separator wherein the biomass and water are separated is disclosed. Some of the biomass is recycled directly to the process tank and some is transferred to a tank with a stirrer and then to a tank with hydrocyclones before being recycled to the process tank.

In purification systems where a larger waste water volume is treated the process tanks have to be built such that the water flows circulate in a horizontal plane, i.e. the basins are constructed e.g. circular or oval with an island or a partition in the center. So far it has been necessary to protect the sedimentation device from the circulating water in a separate chamber. Such a purification system is disclosed in WO-A1-8200134. The basin is connected to one or more secondary sedimentation devices.

Purification systems, wherein a sedimentation device is incorporated in the process tank, are known from US-A-3,482,694, DE-A-2039422 and EP-A1-0048630. The sedimentation devices are in the form of lamella separators.

The object of the invention is to provide a structure for a purification system having a process tank by means of which it is possible to incorporate a sedimentation device directly in the process tank, without it being necessary to protect the inlet of the sedimentation device.

This object is achieved according to the invention in that the sedimentation device is arranged in the actual process tank in that walls are arranged in such a manner that a flow of water is guided by the walls and that the sedimentation device is arranged above said guided flow of water whereby the water flows substantially parallel with the underside of the sedimentation device, between the underside of the said sedimentation device and the bottom of the process tank, whereby the settled sludge is moved away and is mixed with the circulating water, the gaps between the lamella plates of the sedimentation device being arranged substantially transversely to said flow of water and said sedimentation device comprises a quiescent zone immediately below a lamella zone. Because the hydrostatic pressure part of the water flow will hereby flow up through the lamella separator, and when ensuring that the flow of water is smooth, i.e. substantially without turbulence, a uniform hydrostatic pressure above the lamella gaps and thereby uniform flow between the plates are obtained.

The invention makes it possible to integrate a sedimentation device directly in a process tank, even though the water in a process tank typically flows at quite high rates, e.g. up to ½ m per second. The sedimentation device is provided at a location in the process tank where the water is permitted to flow along the underside of the sedimentation device. The outlet of the sedimentation device is connected with the outlet of the actual process tank, so that a hydrostatic pressure moves the water through the sedimentation device. The water is thus moved through the lamella sections of the sedimentation device where the water is relatively calm, so that particles and activated sludge precipitate or settle and sink in countercurrent to the flow of water between the lamella plates. The actual sedimentation takes place by a combination of gravitation and hydraulic suction provided by the water flowing below the sedimentation device. When leaving the sedimentation device through its inlet, the sedimented sludge will again be absorbed by the water flowing there beneath and be discharged. Thus no sludge sediments will be formed immediately below the sedimentation device, thereby eliminating or reducing the problems of return sludge pumping, sludge scrapers, maintenance and cleaning.

With the constructive features defined in claim 2 the sedimentation device of the invention can be incorporated in already existing water purification systems. The purification system is preferably constructed as stated in claim 3, the inlet of the sedimentation device being located at a certain depth in the tank, while discharge takes place through a discharge trough having an overflow wall which is located in the surface region of the process tank. The lamella plates preferably form an angle with the vertical in the range of + 45°, and to minimize deposits on the lamellae an angle of + 30° will be most expedient. As stated in claim 6, the lamella plates preferably extend above the surface level of the process tank, so that the water leaves the passages between the lamella plate via the external overflow wall without having been mixed with water from other lamella passages. Claim 7 defines an inexpensive implementation of the invention in a system known from the Danish Patent DK 166 093B.

The lamella separator of the invention may be used with an underlying, parallel flow of water from which the liquid is pressed into the separator via a hydrostatic pressure applied therefrom, said flow of water simultaneously providing the necessary hydraulic suction to move the particles back to the circuit.

In a particularly expedient embodiment of the outlet of the separator, the structure with the lamella elements higher than the overflow wall ensuring that the water from the various lamella passages is not mixed prior to discharge. A substantially uniform flow is hereby obtained in all the lamella passages of the separator. This has been a problem in the past, but has been solved by the present invention.

The invention will be explained more fully below in connection with preferred embodiments and with reference to the drawing, in which
fig. 1 is a sectional view along the line I-I in fig. 2 of a preferred embodiment of a purification system according to the invention,
fig. 2 is a schematic top view of the purification system shown in fig. 1,
fig. 3 illustrates the function of a lamella separator for use in connection with the purification system shown in figs. 1 and 2,
fig. 4 shows an alternative embodiment of a purification system according to the invention where the lamella separator is located in the center,
fig. 5 shows a further alternative embodiment of a purification system according to the invention where lamella separators are located in parallel and may have a common discharge trough,
fig. 6 illustrates with partly transparent walls the division of a lamella separator according to the invention,
fig. 7 is an end view of a lamella separator enabling equal distribution of water between the lamellae,
fig. 8 is a top view of the lamella separator shown in fig. 7, while
fig. 9 is a lateral view of the lamella separator of figs. 7 and 8.

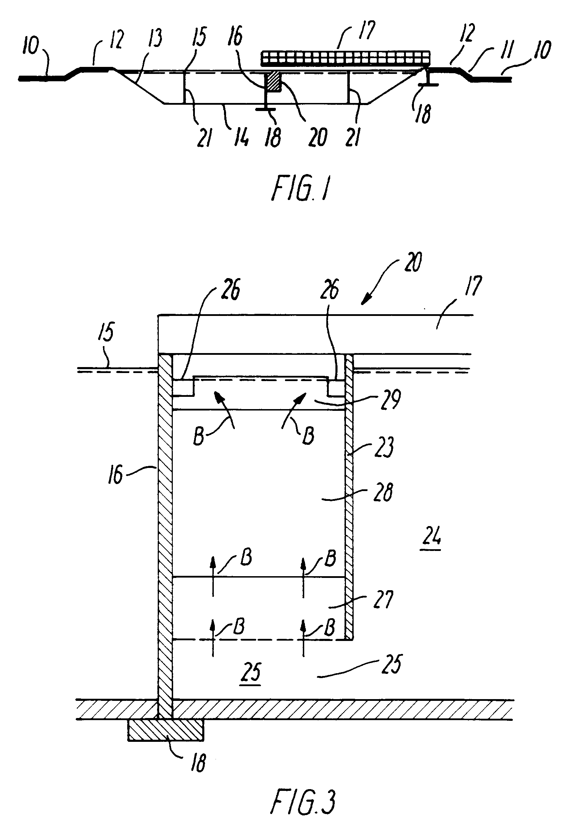

Fig. 1 is a sectional view of a process tank for a purification system according to the invention. The process tank may e.g. be of the type described in the Danish Patent DK 166 093B, but, of course, the invention may be used in all types of purification systems having a circulating flow of water. The process tank in said Danish Patent concerns a particularly inexpensive construction, since the water in the tank or the basin is separated from the surroundings by a plastics membrane applied directly to the substrate or to a drain layer. Thus, a basin 14 has been dug with surrounding embankments 12 which, in terms of level, are higher than the surrounding ground level 10. The bottom of the basin 14 and the inclined inner side 13 of the embankments 12 are coated with a plastics membrane (not shown) which, in spite of a groundwater level corresponding to the ground level 10, is kept in position by the hydrostatic pressure from the water in the basin, the water surface 15 being considerably higher than the groundwater level.

Guide walls for the circulating water are provided in the actual basin, and these are secured by a foundation 18 which extends down through the plastics membrane. These foundations 18 carry guide walls 21 and a partition 16 as well as other structures in the process tank, including a bridge 17 which provides access to the partition 16 in the center of the basin. The guide walls 21 are used for dividing the ground basin into aerobic and anoxic zones, such that various processes take place in various sections of the basin. The basin may alternatively be made of fibre concrete.

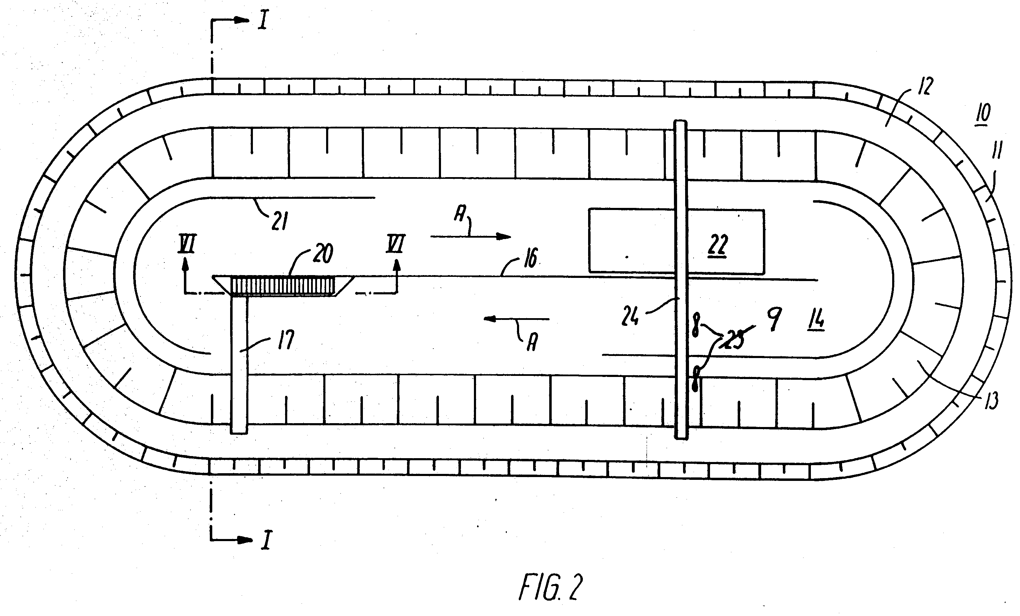

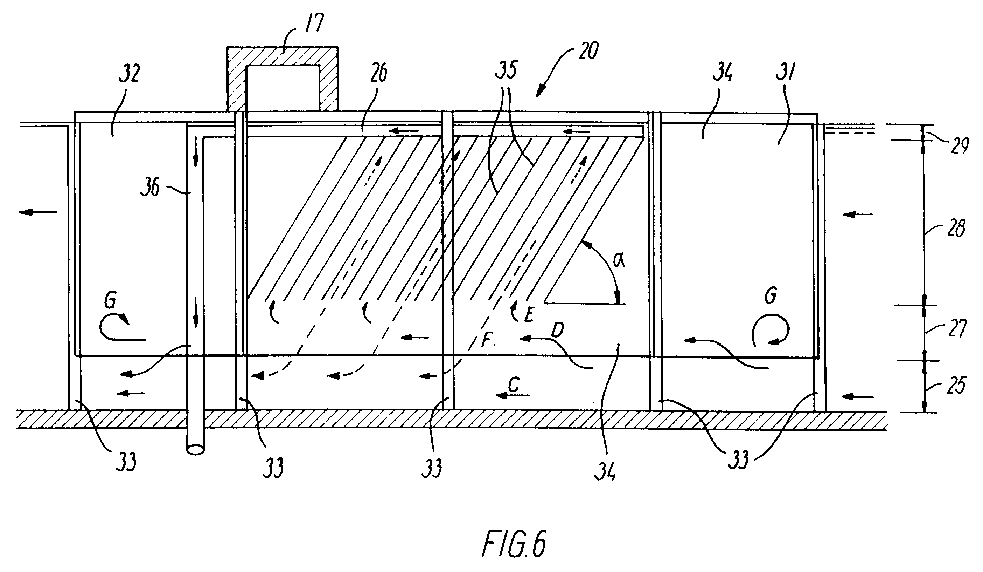

Fig. 2 shows the oval shape of the process tank, and the arrows A indicate the direction of flow of the water in the process tank. This flow is provided by a plurality of propeller agitators 9 which are secured to a transverse bridge structure 24. The sloping side faces 11 and 13 are visible along the plane central part of the embankment 12. When the process tank is filled, the water line extends almost right up to the plane part 12 of the embankment 12. The water is oxidized with one or more diffusors 22 which periodically blow air and oxidize the water. A lamella separator 20, whose function will be explained more fully below, is arranged at one end of the partition 16. Fig. 1 is a section along the line I-I in fig. 2, and fig. 6 is a section along the line VI-VI in fig. 2. In the operation of the system the water flows at rates which of course vary from place to place, but the typical flow rate in the deepest part of the basin is preferably between 0.2 and 0.5 m per sec.

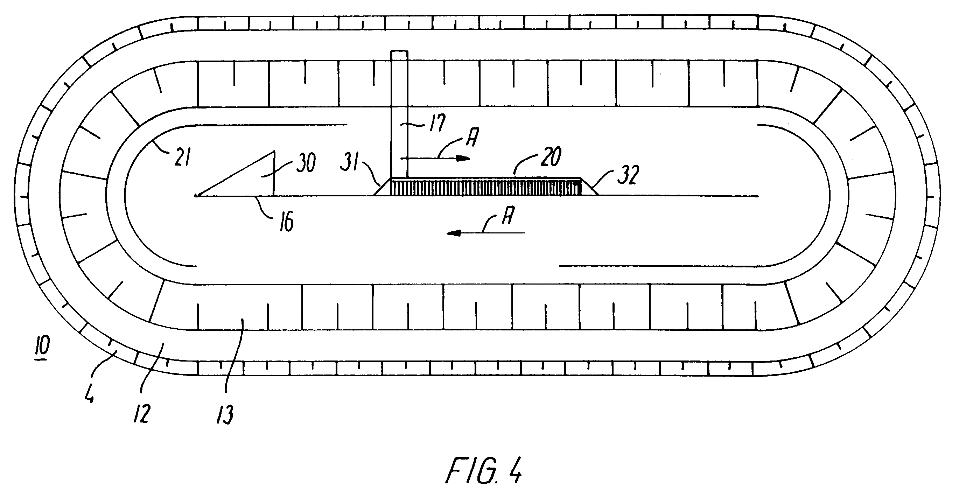

Fig. 3 schematically shows the zone division of the Separator 20 shown in figs. 1 and 2. It will be seen that the separator 20 is secured to the partition 16, which thus constitutes one side wall of the separator, while the other side wall 23 of the separator extends substantially in parallel with the partition 16. It will be seen that the side wall 23 does not extend in the entire depth of the basin, but terminates immediately above the bottom. Thus, water will flow in parallel with the partition 16 in a zone 24 along the sedimentation device 20, as well as in a zone 25 located below said zone, the zone 25 being also called the transport zone. It will likewise be seen that the separator has two discharge troughs 26, it being noted that the surface level of the liquid in the discharge troughs 26 is lower than the surface level 15 of the rest of the process tank. Thus, a hydrostatic pressure will move liquid in the direction indicated by the arrow B, so that liquid is moved from the transport zone 25 to a quiescent zone 27 immediately below a lamella zone 28. When the water leaves the lamella zone 28, it will be cleaned of sludge and particles, and it will therefore be clear while the uppermost zone is called clear water zone 29. The water leaves the process tank from there in a known manner, which takes place via overflow troughs 26 which are connected with a discharge channel (not shown). The water rate in the transport zone 25 is relatively high, while the quiescent zone is shielded by the end walls of the separator so that the water rate has already dropped significantly here. In the lamella zone the water passes through quite narrow gaps between the individual lamellae, thereby providing a hydraulic suction which, together with the gravitation, moves the relatively heavier sludge downwardly, while the water rises and is thus clarified.

Of course, the size of the separator depends on the capacity, but the separator has shown its efficiency in an embodiment where it had a width of 2.3 m. The clear water zone 29 was 40 cm high on that occasion, while the lamella zone 28 was 2.10 m, and both the quiescent zone 27 and the transport zone 25 were 75 cm. However, it seems on the basis of the tests performed that the principle can work at any rate when the separator has a width of between 50 cm and 5 m, where the clear water zone may be varied from below 0.5 cm to 1 m, and the lamella zone may be varied from below 50 cm to 3 m, while the quiescent zone from being almost omissible may assume a height of 2 m. The transport zone merely transports the water, so it is only the capacity of the system that controls the height of it, but heights greater than 20 cm have been found expedient.

In the transport zone a flow of water, which is substantially parallel with the underside of the sedimentation device, flows along the underside of the sedimentation device, the gaps between the lamella plates being substantially arranged transversely to the flow of water.

Fig. 4 shows another location of the separation device 20, it being here located halfway on the central wall 16. It is well-known that water passing a corner and having a high flow rate creates turbulence immediately after the corner. The zone 30 will therefore frequently be troubled by creation of eddies, which may interfere with the function of the separator device. However, this formation of eddies may be compensated to a great extent by constructing the front end 31 and the rear end 32 of the separator hydrodynamically correctly, e.g. a wedge-shape with the pointed end facing the partition 16. However, in some cases it may be expedient to arrange the separator 20 centrally on the partition 16. It is essential to the invention that the flow of water in the transport zone is smooth or approximately smooth.

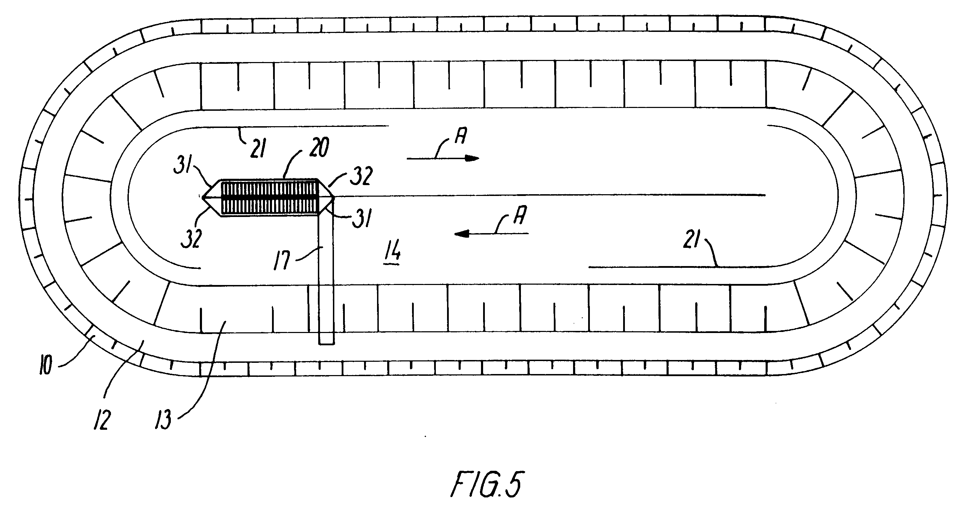

Fig. 5 shows a process tank according to the invention, where the separator device 20, like in the embodiment shown in fig. 2, is arranged at the end of the partition 16, but consists here of two individual separators, which may e.g. have a common outlet. The structure of the process tank otherwise corresponds to the structure explained in connection with figs. 4 and 2. The two separators are here advantageously provided with a common overflow channel extending along the central wall 16.

Fig. 6 is a partially sectional view of the sedimentation device 20 according to the invention along the line VI-VI in fig. 2. It will be seen that, in addition to the central wall 16, the outer walls of the sedimentation device comprise elements 34 of concrete which are secured between uprights 33. These concrete elements 34 thus also constitute the inclined front and rear walls 31, 32 of the sedimentation device. Actually, it is just necessary that the front and the rear walls 31, 32 are terminated at a certain height above the bottom so as to provide for through-flow below the actual sedimentation device, but owing to the conditions of flow it may also be expedient that the side wall 23, too, is terminated downwardly at a given distance on the bottom.

It will be seen that part of the water which flows inwardly below the sedimentation device in the transport zone 25 and is marked by the arrow C, leaves the transport zone 25 and is directed upwardly to the quiescent zone 27 and it marked by the arrow D. From here, the hydrostatic pressure produced by the liquid level differences in the sedimentation device and outside the sedimentation device causes the water to be directed upwardly between the lamellae 35 in the direction indicated by the arrow E. The water will thus be directed upwardly between the lamellae and flow over an overflow edge down into the discharge through 26, which is upwardly open and is connected with a discharge channel 36 leading the clarified waste water away from the process tank. The rate of flow decreases up through the quiescent zone.

A downwardly directed hydraulic suction caused by the flow of water in the transport zone 25 is applied to the particles and sludge or the biomass during the passage through the lamella zone 38. At the same time a downwardly directed force of gravitation is applied to the particles and the sludge, because the density of the sludge and the particles is greater than that of the water. It will be seen that the lamellae are arranged such that the flow of water indicated by the arrow I is in counterflow to the transport flow indicated by the arrow C. Depending on the desired properties the lamellae may be arranged downstream or upstream, and the inclination of the lamellae with respect to the vertical is typically within + 45°. The distance between the individual lamellae 35 is typically of the order of 10 cm, but variations between from quite few cm up to 20-25 cm will give the desired result. Of course, it is clear that the steeper the lamellae are, the more easily the sludge sinks to the bottom. Further, it will also be clear to a skilled person that the lamellae may be formed with bends or be corrugated so that the rate of flow between the lamellae is reduced because of pressure loss. It will simultaneously be seen that the water forms eddies G behind the front side 31 as well as the rear side 32, which has no importance since the eddies are not formed immediately below the lamella zone.

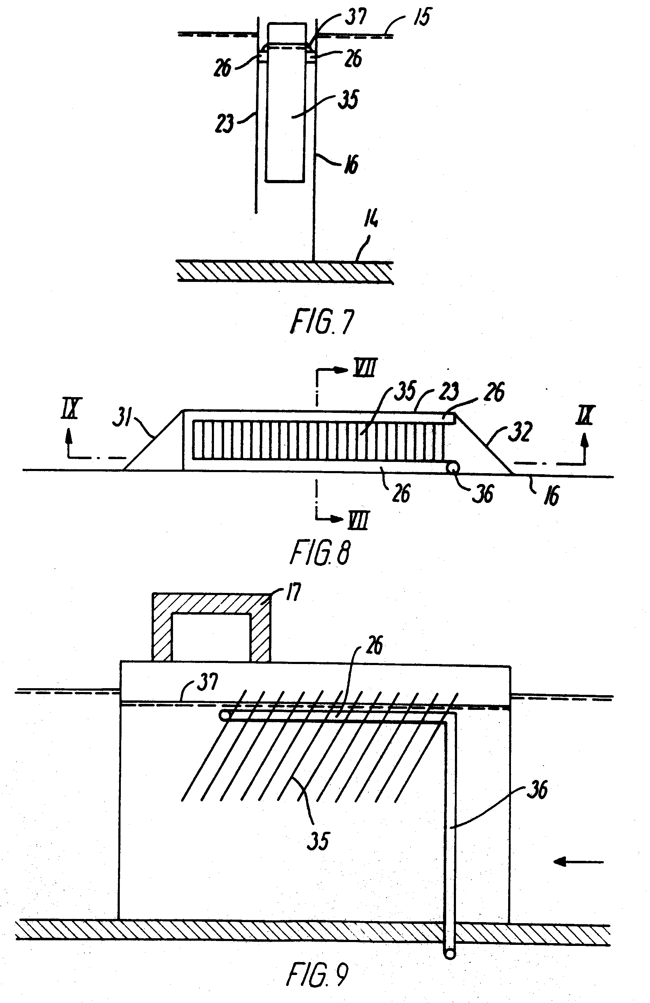

Fig. 7 shows that the lamellae 35 have a considerably higher extent than the discharge troughs 26; an overflow wall 37 is provided between the discharge through and the passages between the lamellae 35, it being seen that the water falls directly from the passages down into the trough 26. Thus, the water from the individual passages will not be mixed before the trough 26, so that the hydrostatic pressure directing the water upwards will be substantially constant in all the passages between the lamellae 35. Fig. 7 is a section along VII-VII in fig. 8.

It will be seen in fig. 8 that there are two interconnected discharge troughs 26 which are connected with a closed channel 36 through which the water is discharged.

Fig. 9 shows the overflow wall 37 which the water passes before reaching the discharge trough 36.

Thus, each lamella passage has its own overflow edge. This entails that the passages are self-cleaning to a certain degree. If a passage is blocked by dirt, the hydrostatic pressure increases since the water level in the passage decreases in relation to the water level in the process tank. When the lamella passages are divided into sections and groups of e.g. five passages are provided with a shutter which shuts off the overflow path, the passages can be cleaned individually by shutting off a group. Alternatively, all the other groups may be shut off, and overflow may be permitted from just the blocked group. The hydrostatic pressure will hereby be increased above the blocking, thereby releasing the dirt.

## Claims

1. A purification system including a process tank having an inlet and an outlet (26, 36), the water is forced to circulate in a substantially horizontal flow within said process tank, during said circulation in the process tank waste water is purified, the purification being performed biologically in the tank by activated biomass or activated sludge with microorganisms which absorb organic material and nutritive salts, said activated sludge being separated in a sedimentation device (20) from the water discharged through the outlet for recirculation in the tank, said sedimentation device (20) being provided with a lamella section having substantially parallel lamella plates (35) such that the water is caused to flow over the lamella plates before leaving the process tank, whereby the sludge settles, the sedimentation device (20) is arranged in the actual process tank, **characterized** in that walls (21, 23) are arranged in such a manner that a flow (C) of water is guided by the walls (21, 23) and that the sedimentation device (20) is arranged above said guided flow (c) of water whereby the water flows substantially in parallel with the underside of the sedimentation device (20) between the underside of the said sedimentation device and the bottom (14) of the process tank, whereby the settled sludge is moved away and is mixed with the circulating water, the gaps between the lamella plates of the sedimentation device being arranged substantially transversely to said flow (C) of water and said sedimentation device (20) comprises a quiescent zone (27) immediately below a lamella zone (28).

2. A purification system according to claim 1, provided with an oval tank having a substantially vertical central wall (16), **characterized** in that the sedimentation device (20) is arranged between the central wall (16) and another wall (23) arranged in parallel with said central wall (16), the two walls (16, 23) and the underside of the sedimentation tank (20) and the bottom (14) of the tank forming between them a passage which has a substantially rectangular cross-section and which is open at both ends.

3. A purification system according to claim 1 or 2, **characterized** in that the sedimentation device (20) has a water inlet from a transport zone (25) along the bottom of the process tank, in which zone the water passes at a substantially constant flow rate, and a water outlet (26) from a settling zone (29) at the water surface of the process tank, a discharge trough (26) having an overflow wall (37) being provided in the settling zone (29).

4. A purification system according to claims 1-3, **characterized** in that the lamella plates (35) of the sedimentation device form an angle (α) with the vertical in the range ± 45°.

5. A purification system according to claim 4, **characterized** in that the lamella plates (35) of the sedimentation tank form an angle (α) with the vertical in the range ± 30°.

6. A purification system according to claims 1-5, **characterized** in that the lamella plates (35) extend above the overflow plate (37) of the discharge trough (26) such that the water leaves the passage between respective lamella plates (35) via the external overflow wall (37) before being mixed with water from other lamella passages.

7. A purification system according to claims 1-6, **characterized** in that the process tank comprises flexible membrane walls (14) directly on the substrate or on a drain layer arranged thereon.

## Patentansprüche

1. Reinigungssystem mit einem einen Einlaß und einen Auslaß (26, 36) aufweisenden Prozeßbehälter, wobei das Wasser gezwungen wird, innerhalb des Prozeßbehälters in einer im wesentlichen horizontalen Strömung zu zirkulieren, während der Zirkulation in dem Prozeßbehälter Abwasser gereinigt wird, die Reinigung biologisch in dem Behälter durch aktivierte Biomasse oder aktivierten Schlamm mit Mikroorganismen durchgeführt wird, die organisches Material und Nährstoffsalze absorbieren, wobei der aktivierte Schlamm zur erneuten Zirkulation in dem Behälter von dem durch den Auslaß ausgelaufenen Wasser in einer Sedimentationsvorrichtung (20) separiert wird, die Sedimentationsvorrichtung (20) mit einem Lamellenabschnitt versehen ist, der im wesentlichen parallele Lamellenplatten (35) hat, so daß verursacht wird, daß das Wasser vor dem Verlassen des Prozeßbehälters über die Lamellenplatten strömt, wodurch sich der Schlamm absetzt, und die Sedimentationsvorrichtung (20) in dem eigentlichen Prozeßbehälter eingerichtet ist, dadurch gekennzeichnet, daß Wände (21, 23) in derartiger Weise eingerichtet sind, daß eine Strömung (C) von Wasser mit Hilfe der Wände (21, 23) geleitet wird und daß die Sedimentationsvorrichtung (20) oberhalb der geleiteten Strömung (C) von Wasser eingerichtet ist, wodurch das Wasser im wesentlichen parallel mit der Unterseite der Sedimentationsvorrichtung (20) zwischen der Unterseite der Sedimentationsvorrichtung und dem Boden (14) des Prozeßbehälters strömt, wodurch der abgesetzte Schlamm wegbewegt und mit dem zirkulierenden Wasser gemischt wird, wobei die Zwischenräume zwischen den Lamellenplatten der Sedimentationsvorrichtung im wesentlichen quer zu der Strömung (C) von Wasser eingerichtet sind und die Sedimentationsvorrichtung (20) unmittelbar unterhalb einer Lamellenzone (28) eine Ruhezone (27) aufweist.

2. Reinigungssystem nach Anspruch 1, das mit einem ovalen Behälter mit einer im wesentlichen vertikalen Mittelwand (16) versehen ist, dadurch gekennzeichnet, daß die Sedimentationsvorrichtung (20) zwischen der Mittelwand (16) und einer weiteren parallel mit der Mittelwand (16) eingerichteten Wand (23) eingerichtet ist, wobei die beiden Wände (16, 23) und die Unterseite des Sedimentationsbehälters (20) und der Boden (14) des Behälters dazwischen einen Durchlaß bilden, der einen im wesentlichen rechtwinkligen Querschnitt hat und der an beiden Enden offen ist.

3. Reinigungssystem nach Anspruch 1 oder 2, dadurch gekennzeichnet, daß die Sedimentationsvorrichtung (20) entlang des Bodens des Prozeßbehälters einen Wassereinlaß von einer Eörderzone (25), in welcher Zone sich das Wasser in einer im wesentlichen konstanten Strömungsrate bewegt, und einen Wasserauslaß (26) von einer Absetzzone (29) der Wasseroberfläche des Prozeßbehälters hat, wobei eine Auslaufrinne (26) mit einer Überströmwand (37) in der Absetzzone (29) vorgesehen ist.

4. Reinigungssystem gemäß den Ansprüchen 1 bis 3, dadurch gekennzeichnet, daß die Lamellenplatten (35) der Sedimentationsvorrichtung mit der Vertikalen einen Winkel (α) in dem Bereich von ± 45° einschließen.

5. Reinigungssystem nach Anspruch 4, dadurch gekennzeichnet, daß die Lamellenplatten (35) des Sedimentationsbehälters mit der Vertikalen einen Winkel (α) in dem Bereich von ± 30° einschließen.

6. Reinigungssystem gemäß den Ansprüchen 1 bis 5, dadurch gekennzeichnet, daß sich die Lamellenplatten (35) oberhalb der Überströmplatte (37) der Auslaufrinne (26) erstrecken, so daß das Wasser den Durchlaß zwischen jeweiligen Lamellenplatten (35) über die externe Überströmwand (37) verläßt, bevor es mit Wasser von weiteren Lamellendurchlässen gemischt wird.

7. Reinigungssystem gemäß den Ansprüchen 1 bis 6, dadurch gekennzeichnet, daß der Prozeßbehälter flexible Membranwände (14) direkt an dem Substrat oder an einer daran eingerichteten Drainageschicht aufweist.

## Revendications

1. Système d'épuration comportant un réservoir de traitement muni d'une admission et d'une évacuation (26, 36), l'eau étant contrainte à circuler selon un écoulement sensiblement horizontal dans ledit réservoir de traitement, l'eau étant épurée pendant ladite circulation dans le réservoir de traitement, l'épuration s'effectuant par voie biologique dans le réservoir par de la biomasse activée ou de la boue activée à l'aide de microorganismes qui absorbent les matières organiques et les sels nutritifs, ladite boue activée étant séparée, dans un dispositif de décantation (20), de l'eau évacuée au travers de l'évacuation pour une recirculation dans le réservoir, ledit dispositif de décantation (20) étant muni d'une section à lamelles comportant des plaques lamellaires sensiblement parallèles (35), de manière que l'eau soit amenée à s'écouler par dessus les plaques lamellaires avant de quitter le réservoir de traitement afin que la boue décante, le dispositif de décantation (20) étant disposé dans le réservoir du traitement effectif, caractérisé en ce que des parois (21, 23) sont disposées de manière qu'un écoulement (C) d'eau soit guidé par les parois (21, 23) et que le dispositif de décantation (20) soit disposé au-dessus dudit écoulement guidé (C) d'eau afin que l'eau s'écoule sensiblement en parallèle avec le côté sous-jacent du dispositif de décantation (20), entre le côté sous-jacent du dispositif de décantation et le fond (14) du réservoir de traitement, de telle manière que la boue décantée soit évacuée et mélangée à l'eau circulant, les intervalles entre les plaques lamellaires du dispositif de décantation étant disposéS sensiblement transversalement audit écoulement (C) d'eau et ledit dispositif de décantation (20) comprenant une zone calme (27), immédiatement en dessous d'une zone lamellaire (28).

2. Système d'épuration selon la revendication 1, muni d'un réservoir ovale comportant une paroi centrale sensiblement verticale (16), caractérisé en ce que le dispositif de décantation (20) est disposé entre la paroi centrale (16) et une autre paroi (23) parallèle à ladite paroi centrale (16), les deux parois (16, 23) et le côté sous-jacent du réservoir de décantation (20) ainsi que le fond (14) du réservoir formant entre eux un passage qui présente une section droite sensiblement rectangulaire et qui est ouvert à ses deux extrémités.

3. Système d'épuration selon la revendication 1 ou 2, caractérisé en ce que le dispositif de décantation (20) possède une admission pour l'eau provenant d'une zone de transport (25) le long du fond du réservoir de traitement, zone dans laquelle l'eau passe à une vitesse d'écoulement relativement constante et une évacuation (26) pour l'eau provenant d'une zone de décantation (29) au niveau de l'eau du réservoir de traitement, une goulotte d'évacuation (26) munie d'une paroi de trop plein (37), étant prévue dans la zone de décantation (29).

4. Système d'épuration selon les revendications 1-3, caractérisé en ce que les plaques lamellaires (35) du dispositif de décantation forment un angle (α) avec la verticale dans un domaine de ± 45°.

5. Système d'épuration selon la revendication 4, caractérisé en ce que les plaques lamellaires (35) du réservoir de décantation forment un angle (α) avec la verticale dans un domaine de ± 30°.

6. Système d'épuration selon les revendications 1-5, caractérisé en ce que les plaques lamellaires (35) s'étendent au-dessus de la plaque de trop plein (37) de la goulotte d'évacuation (26), de manière que l'eau quitte le passage entre des plaques lamellaires respectives (35) par l'intermédiaire de la paroi de trop plein externe (37), avant d'être mélangée à l'eau provenant d'autres passages lamellaires.

7. Système d'épuration selon les revendications 1-6, caractérisé en ce que le réservoir de traitement comprend des parois membranaires souples (14) directement sur le substrat ou sur une couche drainante qui y est disposée.
